# EUROPEAN PATENT APPLICATION

(11) **EP 4 250 447 A2**
(43) Date of publication of application: **27.09.2023**
(21) Application number: 22174985.6
(22) Date of filing: 24.05.2022
(51) Int. Cl.: H01M 50/204, H01M 50/224, H01M 50/233, H01M 50/244, H01M 50/251, H01M 50/289

(54) **STORAGE RACK, ENERGY STORAGE FRAME, AND ENERGY STORAGE BATTERY CLUSTER**

(30) Priority: 25.03.2022 CN 202210299002
(71) Applicant: CALB Co., Ltd., Changzhou City, Jiangsu Province (CN)
(72) Inventor: SHI, Tengteng, Luoyang City, Henan Province (CN); LI, Wei, Luoyang City, Henan Province (CN); ZHENG, Licheng, Luoyang City, Henan Province (CN)
(74) Representative: Becker, Eberhard

(57) **Abstract**

The invention provides a storage rack (100), an energy storage frame (200), and an energy storage battery cluster. The storage rack (100) includes a first beam (10) and two second beams (20), the first beam (10) includes a support plate (11) and a reinforcement plate (12), and the reinforcement plate (12) is connected to one side of the support plate (11) and below the support plate (11); the two second beams (20) are respectively located on two sides of the first beam (10), each second beam (20) includes a top plate (21) and a side plate (22), the top plate (21) is connected to an top end of the side plate (22), a first folded edge (211) folded downwards is disposed on one end of the top plate (21), and the first folded edge (211) is bonded to the reinforcement plate (12).

## Description

### BACKGROUND

### Technology Field

The invention relates to the technical field of batteries, and particularly, to a storage rack, an energy storage frame, and an energy storage battery cluster.

### Description of Related Art

Energy storage devices are new energy devices that store a battery insert box in an energy storage frame. Specifically, the battery insert box is disposed on the storage rack of the energy storage frame, but in the currently used battery racks, during the installation process, accurate positioning among different beams cannot be implemented, resulting in low assembly efficiency and low connection strength among different beams.

### SUMMARY

The invention provides a storage rack for supporting a battery insert box, and the storage rack includes:
a first beam formed by bending sheet metal, wherein the first beam includes a support plate and a reinforcement plate, the support plate is configured to support the battery insert box, the reinforcement plate is connected to one side of the support plate and disposed below the support plate, and the reinforcement plate is disposed along a direction perpendicular to an insertion direction of the battery insert box;
a second beam disposed on one side of the first beam parallel to the insertion direction of the battery insert box, wherein the second beam is formed by bending sheet metal, the second beam includes a top plate and a side plate, the top plate is connected to a top end of the side plate, the top plate is configured to support the battery insert box, a first folded edge folded downwards is disposed on one end of the top plate along the insertion direction of the battery insert box, and the first folded edge is bonded to the reinforcement plate.

The invention provides an energy storage frame including at least one of the storage racks.

The invention provides an energy storage battery cluster including the energy storage frame and at least one battery insert box, and the battery insert box is inserted into the energy storage frame.

### BRIEF DESCRIPTION OF THE DRAWING

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is the three-dimensional schematic view illustrating the structure of a storage rack of the invention.
FIG. 2 is a schematic structural view of the assembly of a second beam and a first beam in the storage rack shown in FIG. 1 from a first perspective.
FIG. 3 is a schematic structural view of the assembly of the second beam and the first beam in the storage rack shown in FIG. 1 from a second perspective.
FIG. 4 is a schematic structural view of the second beam and the first beam after removing the plastic plate in the storage rack shown in FIG. 1.
FIG. 5 is an exploded schematic structural view of the second beam and the plastic plate in the storage rack shown in FIG. 1.
FIG. 6 is a schematic structural view of the first beam in the storage rack shown in FIG. 1.
FIG. 7 is a three-dimensional schematic view of the structure of an energy storage frame of the invention.
FIG. 8 is a schematic structural view of an energy storage battery cluster of the invention.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

### Embodiment 1

One object of the invention is to provide a storage rack capable of improving the assembly efficiency and the connection strength of a first beam and a second beam.

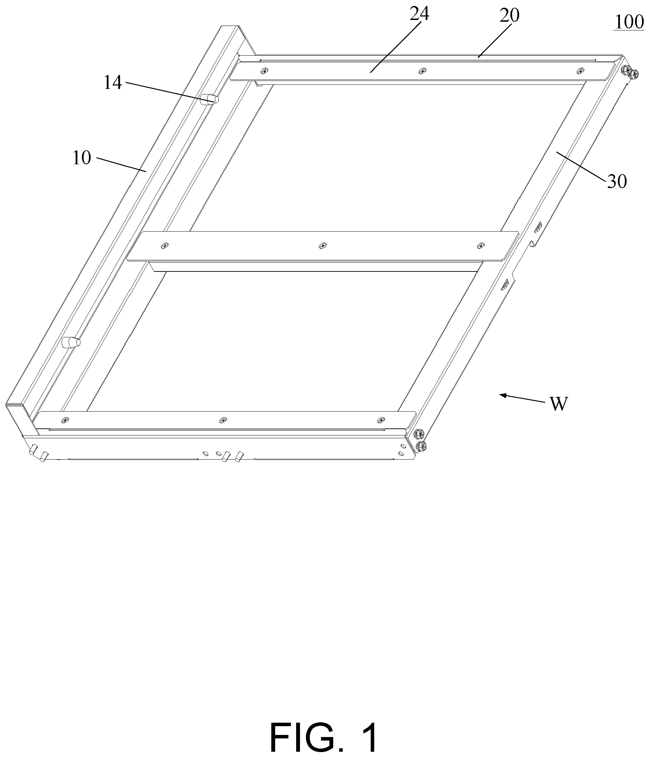

As shown in FIG. 1, the invention provides a storage rack 100 disposed on an energy storage frame 200 and configured to support a battery insert box. The battery insert box may be inserted on the storage rack 100 at a side of the storage rack 100, the storage rack 100 includes a first beam 10 and two second beams 20, and specifically, the storage rack 100 may further include a third beam 30 and/or an intermediate beam. In the embodiment shown in FIG. 1, the storage rack 100 is a structure of a frame 201 formed by the third beam 30, the first beam 10 and the two second beams 20, the third beam 30 and the first beam 10 are disposed oppositely, and the two second beams 20 are disposed oppositely.

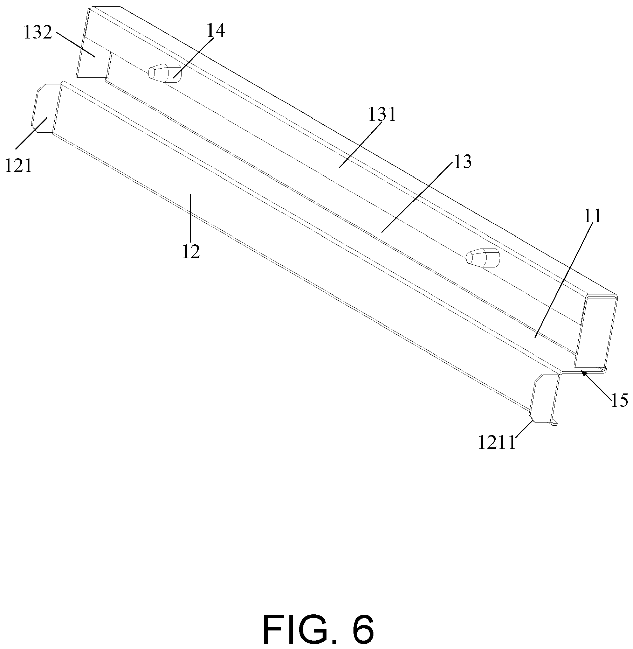

As shown in FIG. 6, the first beam 10 is formed by bending sheet metal, the first beam 10 includes a support plate 11 and a reinforcement plate 12. The support plate 11 is configured to support the battery insert box, the reinforcement plate 12 is connected to one side of the support plate 11 and disposed below the support plate 11, and the reinforcement plate 12 is disposed along a direction perpendicular to the insertion direction of the battery insert box (the direction indicated by the arrow W in FIG. 1). Specifically, the reinforcement plate 12 is connected to a side of the support plate 11 facing the third beam 30, and the reinforcement plate 12 can strengthen the support plate 11, thereby improving the overall use strength of the first beam 10.

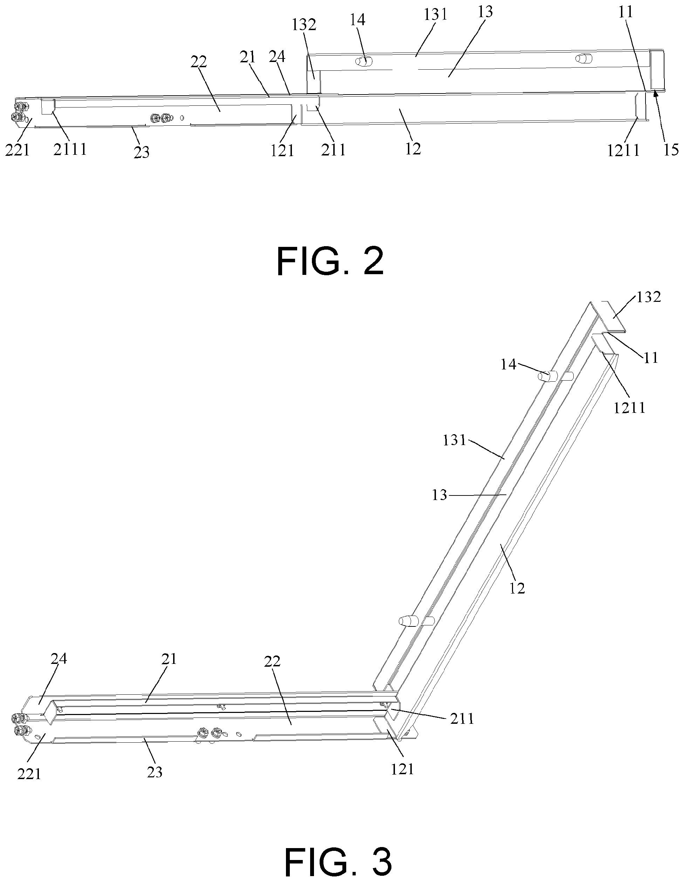

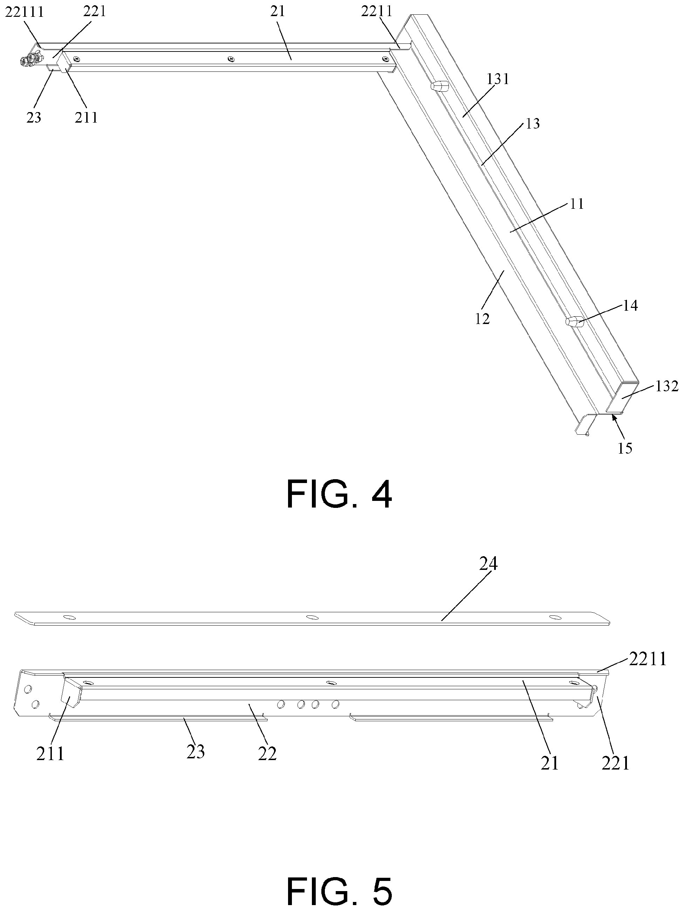

As shown in FIG. 1, FIG. 2, FIG. 3, and FIG. 4, the second beam 20 is disposed on the side of the first beam 10 parallel to the insertion direction of the battery insert box. Specifically, the two second beams 20 are disposed on two sides of the first beam 10 parallel to the insertion direction of the battery insert box, respectively, and the two second beams 20 extend toward the same side of the first beam 10. As shown in FIG. 5, each second beam 20 is formed by bending sheet metal, each second beam 20 includes a top plate 21 and a side plate 22, the top plate 21 is configured to support the battery insert box, the top plate 21 is connected to the top end of the side plate 22, the side plate 22 is configured to be connected to the energy storage frame 200, and meanwhile the side plate 22 can support the top plate 21. A first folded edge 211 folded downward is disposed on one end of the top plate 21 along the insertion direction of the battery insert box, and the first folded edge 211 is bonded to the reinforcement plate 12. Specifically, during assembly, as shown in FIG. 2, FIG. 3, and FIG. 4, the first folded edge 211 is first in contact with the reinforcement plate 12 to position the connection between the second beam 20 and the first beam 10. Then, the first folded edge 211 is welded to the reinforcement plate 12, so that the first beam 10 and the second beam 20 are fixedly connected, that is, the first beam 10 and the second beam 20 are connected by surface contact, which increases the contact area between the first beam 10 and the second beam 20, thereby increasing the connection strength between the first beam 10 and the second beam 20.

Note that the first folded edges 211 may also be disposed on both ends of the top plate 21, allowing more convenient assembly between the second beam 20 and the first beam 10.

The storage rack 100 of the invention is bonded to the reinforcement plate 12 through the first folded edge 211, so that the connection between the second beam 20 and the first beam 10 can be positioned. Therefore, the assembly efficiency is improved, the contact area between the first beam 10 and the second beam 20 can be increased, and therefore the connection strength between the first beam 10 and the second beam 20 is improved, thereby ensuring the overall strength of the storage rack 100.

Furthermore, as shown in FIG. 5, the bottom end of the side plate 22 is connected to a bottom plate 23, and the bottom plate 23 and the top plate 21 are located on the same side of the side plate 22, that is, the cross section of the second beam 20 is C-shaped. Preferably, the top plate 21, the side plate 22, and the bottom plate 23 are integral structures formed by bending sheet metal, the bottom plate 23 can increase the use strength of the side plate 22, and thus the overall use strength of the second beam 20 is improved.

Furthermore, as shown in FIG. 1 and FIG. 5, the top plate 21 is connected to a plastic plate 24 thereon, and the plastic plate 24 is configured to support the battery insert box. For example, the plastic board 24 is a polycarbonate (PC) board, and the polycarbonate board has good wear resistance and a smooth surface, which makes it easier for the battery insert box to be moved to the storage rack 100.

Specifically, the plastic plate 24 is connected to the top plate 21 through a connector. For example, the connector may be a bolt, a fixing pin, or a rivet. In the embodiment, a bolt is preferably configured to facilitate the disassembly and installation of the polycarbonate board, thereby facilitating the replacement of the plastic plate 24.

The plastic board can also be a polypropylene (PP) board or a polyethylene glycol terephthalate (PET) board as long as the friction force between the battery insert box and the top plate 21 can be reduced.

In a specific implementation of the embodiment, as shown in FIG. 2, FIG. 3, and FIG. 4, an extension portion 221 is disposed on the end of the side plate 22 adjacent to the first folded edge 211, and the end surface of the support plate 11 and the end surface of the reinforcement plate 12 are in contact with the extension portion 221. That is, during the assembly process of the first beam 10 and the second beam 20, the extension portion 221 can limit the positions of the support plate 11 and the reinforcement plate 12, so that the positioning between the first beam 10 and the reinforcement plate 12 can be more precise. The assembly efficiency between the first beam 10 and the second beam 20 is further improved. As shown in FIG. 4, a second folded edge 2211 folded toward the support plate 11 is disposed on the upper end of the extension portion 221. The second folded edge 2211 is bonded to the support plate 11. Specifically, the second folded edge 2211 is overlapped with the end of the support plate 11 and welded with the support plate 11. The connection area between the first beam 10 and the second beam 20 is further increased through the cooperative connection between the second folded edge 2211 and the support plate 11, and thus the connection strength between the first beam 10 and the second beam 20 is further improved.

Furthermore, as shown in FIG. 2 and FIG. 3, third folded edges 121 folded toward the second beam 20 are disposed on two ends of the reinforcement plate 12, respectively, and the two third folded edges 121 are bonded to the two side plates 22, respectively. Specifically, when the first folded edge 211 abuts against the reinforcement plate 12, the correspondingly disposed third folded edge 121 is in contact with the side plate 22, and they are connected by welding to further increase the connection area between the first beam 10 and the second beam 20, thereby further improving the connection strength between the first beam 10 and the second beam 20.

Furthermore, as shown in FIG. 2, first chamfers 2111 are disposed at the corners of the first folded edge 211 to prevent the interference between the corners of the first folded edge 211 and the third folded edge 121, affecting the assembly between the first beam 10 and the second beams 20, so that the third folded edge 121 can be smoothly bonded to the side plate 22.

As shown in FIG. 4, second chamfers 22111 are disposed at the corners of the second folded edge 2211 to prevent the interference between the corners of the second folded edge 2211 and the top plate 21, so that the second folded edge 2211 can be smoothly bonded to the support plate 11.

As shown in FIG. 2 and FIG. 3, third chamfers 1211 are disposed at the corners of the third folded edge 121 to prevent the interference between the third folded edge 121 and the top plate 21, so that the third folded edge 121 can be smoothly bonded to the side plate 22.

Note that, in the invention, after two surfaces are bonded together, the bonding connection can also be achieved by bolts, rivets, or fixing pins to connect the two bonded surfaces.

Furthermore, as shown in FIG. 6, the first beam 10 further includes a limit plate 13, and the limit plate 13 is connected to another side of the support plate 11 and located above the support plate 11. That is, the limit plate 13 is located on a side of the support plate 11 away from the second beam 20, the limit plate 13 and the reinforcement plate 12 are located on the upper and lower sides of the support plate 11, respectively, and the limit plate 13 is configured to be bonded to the rear side of the battery insert box to limit the position of the battery insert box.

Furthermore, as shown in FIG. 2, FIG. 3, FIG. 4, and FIG. 6, a folded edge 131 folded toward the support plate 11 is disposed on the upper end of the limit plate 13, and the folded edge 131 can improve the use strength of the limit plate 13. Moreover, when the battery insert box is inserted into the storage rack 100, an impact may be created, and the folded edge 131 can buffer the impact to improve the service life of the limit plate 13. Specifically, the cross section of the folded edge 131 is L-shaped, one side of the folded edge 131 is disposed in parallel with the support plate 11, another side of the folded edge 131 is disposed in parallel with the limit plate 13, and there is a gap 15 between the folded edge 131 and the support plate 11. Such a structure may not increase the overall weight of the first beam 10.

Furthermore, as shown in FIG. 6, limit folded edges 132 are disposed on the two ends of the limit plate 13, respectively, and the limit folded edges 132 are connected to the folded edges 131. That is, the two limit folded edges 132, the folded edge 131, and the limit plate 13 are enclosed to form a hollow structure with an open lower end, and thus the overall strength of the first beam 10 is further increased. Moreover, there is the gap 15 between the limit folded edge 132 and the support plate 11 for inserting the second folded edge 2211. The configuration of the gap 15 not only facilitates the bonding between the second folded edge 2211 and the support plate 11 but also contributes to the guiding and positioning of the configuration of the second folded edge 2211, and thereby the second folding edge 2211 can be accurately positioned on the support plate 11.

Furthermore, as shown in FIG. 2, FIG. 3, FIG. 4, and FIG. 6, the surface of the limit plate 13 facing the second beam 20 is connected to a plug connector. Specifically, the plug connector is located right above the support plate 11, and the plug connector is configured to be plugged and matched with the battery insert box. For example, the plug is a plug 14, a socket matched with the plug 14 is disposed on the rear side of the battery insert box, and the battery insert box is positioned on the storage rack 100 through the snap fit of the plug 14 and the socket. The specific number of the plug 14 may be set according to the actual use requirements. One plug 14 can be disposed, or two or three or more ones can be disposed. Preferably, the limit plate 13 is connected to two gaps for configuring the plugs 14 to ensure the stability of the insertion match of the battery insert box.

Furthermore, as shown in FIG. 6, the plug 14 penetrates through the folded edge 131. Specifically, a through hole is formed on the folded edge 131 corresponding to the position of the plug 14, and the plug 14 passes through the through hole. That is, the free end of the plug 14 is located outside the folded edge 131, and the folded edge 131 can position the plug 14, so that the plug 14 can be placed stably, and thereby the plug 14 can be smoothly plugged and matched with the battery insert box.

The plug 14 can be connected to the limit plate 13 by welding, also be connected to the limit plate 13 by bolts, or be fixedly connected to the limit plate 13 by rivets. Any prior art that allows the plug 14 to be connected to the limit plate 13 should fall within the protection scope of the invention.

The connector can also be a slot disposed on the limit plate 13, and a plug that matches with the slot is disposed on the rear side of the battery insert box, so that the battery insert box can be positioned on the storage rack 100 through the insertion match of the plug and the slot.

### Embodiment 2

Another object of the invention is to provide an energy storage frame including the storage rack.

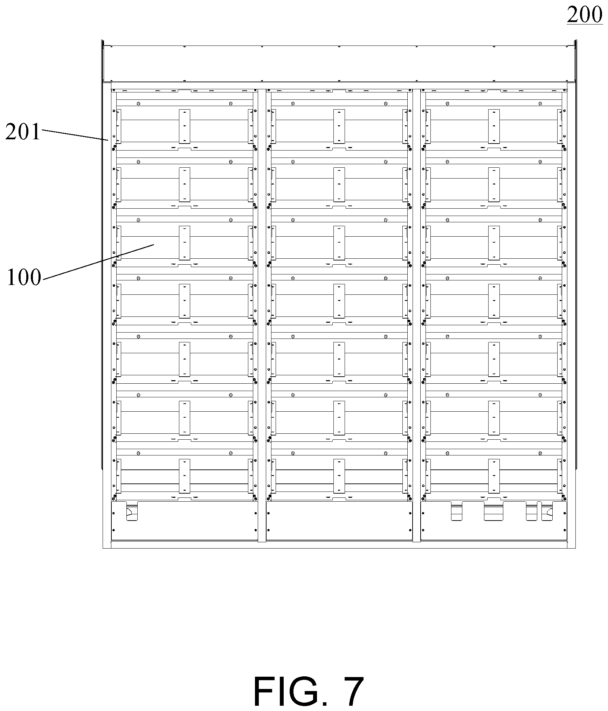

As shown in FIG. 7, the invention further provides the energy storage frame 200, which includes at least one of the storage racks 100. Specifically, the energy storage frame 200 includes the frame 201, and the storage rack 100 is disposed within the frame 201.

The energy storage frame 200 of the invention has the insertion box storage rack, so the energy storage frame 200 has the advantages of convenient and reliable assembly and can secure the battery insert box stably.

Furthermore, as shown in FIG. 7, the energy storage frame 200 further includes a column 2011. Specifically, the frame 201 includes the column 2011, and the second beam 20 of the storage rack 100 is connected to the column 2011. When the configuration of multiple battery insert boxes is required, multiple storage racks 100 disposed at interval are connected from top to bottom on the column 2011 of the frame 201, the inner space of the frame 201 is divided into multiple accommodating cavities by the multiple storage racks 100, a battery insert box can be inserted in each accommodating cavity, and the battery insert box is supported by the storage rack 100.

### Embodiment 3

A third object of the invention is to provide an energy storage battery cluster including the energy storage frame.

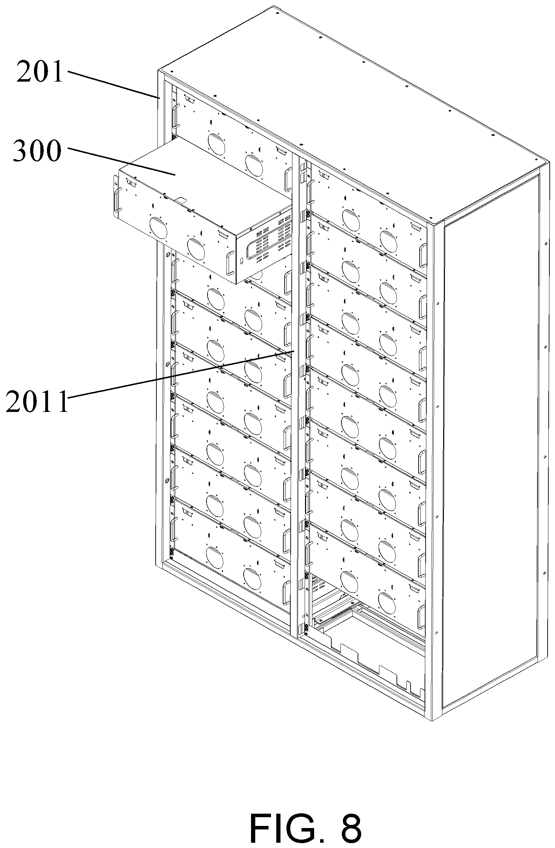

As shown in FIG. 8, the invention also provides an energy storage battery cluster, which includes the energy storage frame 200 and at least one battery insert box 300. The battery insert box 300 is inserted into the energy storage frame 200. The quantity of the battery insert boxes 300 can be adjusted according to actual use requirements and the capacity of the energy storage frame 200.

The energy storage battery cluster of the invention has the energy storage frame and therefore comes with the advantages of convenient assembly and stable configuration of the battery insert box.

In summary, in the storage rack of the invention, the bonding connection between the first folded edge and the reinforcement plate can contribute to not only positioning the connection between the second beam and the first beam but also improving the assembly efficiency as well as increasing the contact area between the first beam and the second beam and improving the connection strength between the first beam and the second beam, so as to ensure the overall strength of the storage rack.

In the storage rack of the invention, through the bonding connection between the second folded edge and the support plate, the connection area between the first beam and the second beam is further increased, thereby further improving the connection strength between the first beam and the second beam.

In the storage rack of the invention, through the bonding connection between the correspondingly disposed third folded edge and the side plate, the connection area between the first beam and the second beam is further increased, thereby further improving the connection strength between the first beam and the second beam.

The energy storage frame of the invention has the storage rack for the battery insert box, so the energy storage frame has the advantage of convenient and reliable assembly and can secure the battery insert box stably.

The energy storage battery cluster of the invention has the energy storage frame and therefore has the advantage of convenient assembly and can secure the battery insert box stably.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A storage rack (100) for supporting a battery insert box (300), wherein the storage rack (100) comprises:
a first beam (10) formed by bending sheet metal, wherein the first beam (10) comprises a support plate (11) and a reinforcement plate (12), the support plate (11) is configured to support the battery insert box (300), the reinforcement plate (12) is connected to one side of the support plate (11) and disposed below the support plate (11), and the reinforcement plate (12) is disposed along a direction perpendicular to an insertion direction of the battery insert box (300); and
a second beam (20) disposed on one side of the first beam (10) parallel to the insertion direction of the battery insert box (300), wherein the second beam (20) is formed by bending sheet metal, the second beam (20) comprises a top plate (21) and a side plate (22), the top plate (21) is connected to a top end of the side plate (22), the top plate (21) is configured to support the battery insert box (300), a first folded edge (211) folded downwards is disposed on one end of the top plate (21) along the insertion direction of the battery insert box (300), and the first folded edge (211) is bonded to the reinforcement plate (12).

2. The storage rack (100) according to claim 1, wherein
an extension portion (221) is disposed on one end of the side plate (22) adjacent to the first folded edge (211), an end surface of the support plate (11) and an end surface of the reinforcement plate (12) are both in contact with the extension portion (221), a second folded edge (2211) folded toward the support plate (11) is disposed on an upper end of the extension portion (221), and the second folded edge (2211) is bonded to the support plate (11).

3. The storage rack (100) according to claim 2, wherein
third folded edges (121) folded toward the second beam (20) are disposed on two ends of the reinforcement plate (12), respectively, and two of the third folded edges (121) are bonded to two of the side plates (22), respectively.

4. The storage rack (100) according to claim 3, wherein
first chamfers (2111) are disposed at corners of the first folded edge (211);
second chamfers (22111) are disposed at corners of the second folded edge (2211); and/or, third chamfers (1211) are disposed at corners of the third folded edge (121).

5. The storage rack (100) according to claim 2, wherein
the first beam (10) further comprises a limit plate (13) connected to another side of the support plate (11) and disposed above the support plate (11).

6. The storage rack (100) according to claim 5, wherein
a folded edge (131) folded toward the support plate (11) is disposed on an upper end of the limit plate (13).

7. The storage rack (100) according to claim 6, wherein
limit folded edges (132) are disposed on two ends of the limit plate (13), respectively, the limit folded edges (132) are connected to the folded edges (131), and there is a gap between the limit folded edges (132) and the support plate (11) for inserting the second folded edge (2211).

8. The storage rack (100) according to claim 6, wherein
a surface of the limit plate (13) facing the battery insert box (300) is connected with a plug connector, and the plug connector penetrates the folded edge (131).

9. The storage rack (100) according to any one of claims 1-8, wherein
a plastic plate (24) is connected to the top plate (21), and the plastic plate (24) is configured to support the battery insert box (300).

10. The storage rack (100) according to any one of claims 1-8, wherein
a bottom end of the side plate (22) is connected to a bottom plate (23), and the bottom plate (23) and the top plate (21) are located on the same side of the side plate (22).

11. An energy storage frame (200), wherein the energy storage frame (200) comprises at least one storage rack (100) according to any one of claims 1-10.

12. The energy storage frame (200) according to claim 11, wherein the energy storage frame (200) further comprises a column (2011), and the second beam (20) of the storage rack (100) is connected to the column (2011).

13. An energy storage battery cluster, wherein the energy storage battery cluster comprises the energy storage frame (200) according to claim 11 or claim 12 and at least one battery insert box (300), and the battery insert box (300) is inserted in the energy storage frame (200).
